# EUROPÄISCHE PATENTANMELDUNG

(11) **EP 4 501 767 A1**
(43) Veröffentlichungstag der Anmeldung: **05.02.2025**
(21) Anmeldenummer: 24191809.3
(22) Anmeldetag: 30.07.2024
(51) Int. Cl.: B62J 45/412, B62J 45/423, B62J 45/421, B62M 6/55, B62M 6/50, B60B 1/00, B60C 29/02, G01P 3/487

(54) **FAHRRAD UND LAUFRADKOMPONENTE FÜR EIN FAHRRAD**

(30) Priorität: 01.08.2023 DE 102023120454
(71) Anmelder: DT Swiss AG, 2504 Biel (CH)
(72) Erfinder: Hugentobler, Simon, CH-3097 Liebefeld (CH); Tschanz, Andreas, 2543 Lengnau (CH); Verhoeven, Nils, CH-2502 Biel (CH)
(74) Vertreter: BSB Patentanwälte Schütte & Engelen Partnerschaft mbB

(57) **Zusammenfassung**

Laufradkomponente (50) für Fahrräder (100) mit einer Felge (1) zur Aufnahme eines mit einer Reifenlauffläche (25a) ausgerüsteten Reifens (25) und mit einer Magneteinrichtung (40) mit einem Gehäuse (42) und einem Magneten (41). Die Felge (1) umfasst einen Felgenkörper (2) mit einem umlaufenden Felgenbett (6) und seitlichen Felgenflanken (3, 4), die am radial äußeren Ende Felgenhörner (7) ausbilden. Zwischen dem Felgenbett und der Reifenlauffläche (25a) wird eine Reifenkammer (12) definiert. Das Gehäuse (42) der Magneteinrichtung (40) ist radial außen auf dem Felgenbett des Felgenkörpers (2) und somit innerhalb der Reifenkammer befestigt.

## Beschreibung

Die vorliegende Erfindung betrifft eine Laufradkomponente für ein Fahrrad und ein Fahrrad umfassend wenigstens zwei Laufräder und einen in regelmäßigen Betrieb wenigstens teilweise muskelbetriebenen Pedalantrieb, wobei wenigstens eines der Laufräder als Vorderrad und wenigstens eines der Laufräder als Hinterrad ausgebildet ist. Die Laufräder verfügen jeweils über eine Nabe, eine mit der Nabe verbundene Felge mit einem Felgenkörper und jeweils einem auf dem Felgenkörper montierten Reifen. Das Fahrrad erfasst mit wenigstens einem Sensor ein Maß für eine Fahrgeschwindigkeit.

Im Stand der Technik sind verschiedenste Fahrräder bekannt geworden, bei denen ein Geschwindigkeitsmesser vorgesehen ist, um dem Benutzer beim Fahren anschaulich Informationen über die Fahrgeschwindigkeit und gegebenenfalls den zurückgelegten Weg zur Verfügung zu stellen. Elektronische Systeme können dabei die aktuelle Fahrgeschwindigkeit, die seit Fahrtbeginn zurückgelegte Strecke, die Durchschnittsgeschwindigkeit und auch die gesamten Fahrkilometer anzeigen. Außerdem können elektronische Systeme mit Zusatzsensoren die Trittfrequenz am Tretlager und gegebenenfalls einem Brustgurt die Herzfrequenz des Benutzers anzeigen.

Seit einigen Jahrzehnten funktionieren solche Systeme oft über einen magnetischen Impulsgeber, wobei der Magnet an einer Speiche montiert wird und bei der Drehung des Laufrades magnetische Impulse ausgibt, die von einem beispielsweise an der Gabel montierten Magnetsensor beim Vorbeidrehen des Magneten detektiert werden bzw. darin erzeugt werden. Über den bekannten Umfang des Laufrades und die ermittelte Frequenz der erfassten Magnetimpulse können die Fahrgeschwindigkeit und die zurückgelegte Strecke abgeleitet werden. Derartige Systeme sind seit Jahrzehnten bekannt und funktionieren grundsätzlich. Ein gewisser Nachteil ist, dass der an einer Speiche befestigte Magnet verrutschen oder sich verdrehen oder verloren gehen kann, sodass die Erfassung der Fahrparameter dann nicht mehr zuverlässig oder gar nicht mehr gelingt. Mechanische Zähler wurde früher verwendet, haben aber andere Nachteile.

In den letzten Jahren sind weiterhin Fahrräder bekannt und beliebt geworden, bei denen ein Elektromotor eingesetzt wird, um den Benutzer beim Treten gezielt zu unterstützen. Das betrifft nicht nur Cityfahrräder, sondern auch Mountainbikes und auch Rennräder. Bei solchen Fahrrädern wird für die Steuerung und/oder Regelung der Motorunterstützung eine Erfassung der Fahrgeschwindigkeit erfordert. Auch bei diesen Systemen wird oft ein Magnet an einer Speiche montiert, der bei der Rotation des Laufrades Impulse an einen Sensor ausgibt bzw. darin erzeugt. Die Signale werden zur Bestimmung der Fahrgeschwindigkeit und der Fahrstrecke ausgewertet.

Bei den Fahrrädern mit elektrischer Unterstützung gibt es von der Robert Bosch GmbH z. B. Elektromotoren, die als Mittelmotoren eingesetzt werden und den Fahrer direkt an der Tretkurbel elektrisch unterstützen.

Mit der EP 4 137 394 A1 ist eine Felgenmagnetanordnung für Fahrräder mit Mittelmotoren bekannt geworden, bei der der Felgenmagnet radial von Ihnen auf das Ventil aufgeschoben und gegen den Felgenboden gedrückt wird. Der Felgenmagnet wird mit einer Ventilmutter befestigt und gesichert und federnd gegen den Felgenboden gedrückt. Der Sensor zur Erfassung des Magnetfeldes ist in dem Mittelmotor untergebracht und erfasst das Magnetfeld des Magneten beim Vorbeirotieren des Ventils an dem Tretlager bzw. dem Mittelmotor. Das System funktioniert grundsätzlich zufriedenstellend. Ein gewisser Nachteil ist aber, dass bei Wechsel des Ventils bzw. eines Schlauches der Felgenmagnet bei der anschließenden Montage nicht vergessen werden darf oder auch verloren gehen kann. Es kann auch passieren, dass beim Transport oder beim Abstellen eines Fahrrads der Felgenmagnet an andere Komponenten oder Teile anstoßen und zerstört werden kann oder verloren gehen kann. Auch beim Aufpumpen des Reifens kann die Ventilmutter absichtlich oder unabsichtlich gelöst werden, was zum Verlust des Felgenmagneten führen kann.

Solche Nachteile hat ein unmittelbar an der Speiche befestigter Magnet nicht, der zudem meist leichter baut. Ein Speichenmagnet kann grundsätzlich auch beim Transport anstoßen und dadurch z.B. verdreht werden. Der Speichenmagnet kann dann aber einfach und schnell wieder in eine korrekte Position zurückgedreht werden. Dazu ist meist weder Werkzeug noch Fachwerkstatt erforderlich. Auch wird der Speichenmagnet bei einem Reifen- oder Schlauchwechsel regelmäßig nicht berührt und erst recht nicht abgenommen. Ein leichter Speichenmagnet erfordert jedoch einen nahe am Magneten platzierten Sensor, der das Signal erfassen kann. Das wird bei Mountainbikes oft realisiert.

Statt an der Speiche kann der Magnet auch an einer Scheibenbremsenbefestigung aufgenommen werden. Auch da muss das Signal übertragen werden. Dazu muss zu dem nahe an dem Magneten angeordneten Sensor ein entsprechendes Kabel an dem Rahmen entsprechend lang geführt werden. Das Kabel wiederum kann auch zerstört werden.

Mit der EP 3 435 024 A1 ist ein Verfahren sowie eine Vorrichtung zur Überwachung der Radbewegung eines Zweirads bekannt geworden. Dabei wird ein Magnet oder es werden besser mehrere Magnete am Rad gleichmäßig verteilt befestigt. Ein dem Rahmen zugeordneter Magnetfeldsensor erfasst das Magnetfeld der Magnete in zwei Raumrichtungen. Die bei einem fehlerfreien Rad erfassten Magnetfeldsignale werden abgespeichert und das jeweils aktuelle Magnetfeldsignal wird mit den abgespeicherten Werten verglichen. Bei signifikanten Abweichungen wird ein Radfehler signalisiert. Dabei kann mit mehreren Magneten ein Seitenschlag oder Achter, ein Höhenschlag oder eine falsche Radeinspannung erkannt werden. Nachteilig ist, dass zu einer Erfassung z.B. eines Achters oder eines Seitenschlags mehrere Magneten über dem Umfang verteilt eingesetzt werden müssen. Dabei können die Magnete am Mantel, in oder an der Felge oder im äußeren Bereich der Speichen oder im oder am Reifenventil angebracht werden kann. Mehrere Magnete im Mantel oder in der Felge erfordern spezielle Reifen oder die Fertigung spezieller Felgen. Das ist aufwendig und solche Reifen und Felgen werden nicht generell eingesetzt, sodass das teuer ist.

Bekannt geworden sind auch Fahrradcomputer, die über ein GPS-Modul verfügen und die Fahrgeschwindigkeit und die zurückgelegte Wegstrecke aus den GPS-Signalen ableiten. Das funktioniert grundsätzlich und erlaubt auf längere Distanzen eine ausreichende Genauigkeit der Erfassung und Ermittlung der Fahrstrecke. Nachteilig ist aber, dass die Fahrparameter nicht jederzeit genau bzw. genau genug für z.B. eine Motorsteuerung oder auch sonst bestimmt werden können, wenn sich der Fahrer z.B. im dichten Wald oder in einem Tunnel befindet.

Es ist deshalb die Aufgabe der vorliegenden Erfindung ein Fahrrad und eine Laufradkomponente zur Verfügung zu stellen, womit eine noch zuverlässigere Bestimmung der Fahrparameter ermöglicht wird.

Diese Aufgabe wird gelöst durch eine Laufradkomponente mit den Merkmalen des Anspruchs 1 und durch ein Fahrrad mit den Merkmalen des Anspruchs 12. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente ist für wenigstens teilweise muskelbetriebene Fahrzeuge und insbesondere Fahrräder vorgesehen und umfasst eine Felge zur Aufnahme eines mit einer Reifenlauffläche ausgerüsteten Reifens. Weiterhin umfasst die Laufradkomponente eine Magneteinrichtung. Die Felge umfasst einen Felgenkörper mit seitlichen Felgenflanken, die vorzugsweise am radial äußeren Ende Felgenhörner ausbilden. Der Felgenkörper weist insbesondere (axial zwischen den Felgenhörnern) ein Ventilloch an einer radial äußeren Felgenbettfläche (insbesondere radial außen an dem Felgenbett) auf. Insbesondere weist der Felgenkörper eine radial innere Felgenbodenfläche auf, wobei bei Scheibenrädern eine solche gegebenenfalls nicht vorhanden ist. Die Magneteinrichtung umfasst ein Gehäuse mit wenigstens einem (daran oder darin aufgenommenen) Magneten. Zwischen dem Felgenbett und einer Reifenlauffläche eines auf dem Felgenkörper aufnehmbaren Reifens wird insbesondere eine Reifenkammer definiert bzw. ist dadurch definierbar. Eine solche Reifenkammer bildet eine Begrenzung von dem Felgenbett und dem Reifen und gegebenenfalls den Felgenhörnern. Das Gehäuse der Magneteinrichtung ist bevorzugt radial außen auf dem Felgenbett des Felgenkörpers befestigt. Das bedeutet insbesondere, dass die Magneteinrichtung somit innerhalb der Reifenkammer befestigt ist. Besonders bevorzugt ist das Gehäuse der Magneteinrichtung durch eine Klebstoffschicht zwischen dem Felgenbett und dem Gehäuse der Magneteinrichtung mit dem Felgenkörper verliersicher verbunden. Vorzugsweise weist das Gehäuse der Magneteinrichtung in dem Bereich des Ventillochs eine Durchtrittöffnung für das Ventil auf, durch welche das Ventil ragt und die Magneteinrichtung radial von außen auf dem Felgenbett des Felgenkörpers (und somit innerhalb der Reifenkammer) befestigt und insbesondere zusätzlich sichert.

Die erfindungsgemäße Laufradkomponente hat viele Vorteile. Die Magneteinrichtung ist radial außen auf dem Felgenbett befestigt und nicht radial innen am Felgenboden oder an einer Speiche, wie im Stand der Technik. Das bietet den ganz erheblichen Vorteil, dass im bestimmungsgemäßen Gebrauch die Magneteinrichtung in der Reifekammer untergebracht ist und schon deshalb regelmäßig im Betrieb oder beim Abstellen des Fahrrads oder eines Laufrades nicht beschädigt werden kann und auch nicht verloren gehen kann. Auch bei einem Wechsel eines Reifens besteht keine Gefahr eines Verlustes.

Ein montierter Reifen ist für die Realisierung der Erfindung nicht notwendig, aber wenn man sich einen montierten Reifen vorstellt, erleichtert das die Vorstellung von der Anordnung der Teile. Die Magneteinrichtung befindet sich dann innerhalb des durch den Reifen und das Felgenbett aufgespannten Volumens.

Das Gehäuse weist insbesondere eine Länge, eine Breite quer dazu und eine Höhe quer zu Länge und Breite auf. Die Länge ist insbesondere wenigstens doppelt so groß, wie die Breite und die Höhe. Insbesondere ist die Magneteinrichtung wenigstens dreimal so lang wie breit oder hoch. Eine maximale (radiale) Höhe beträgt vorzugsweise weniger als ein Drittel oder ein Viertel einer Länge. In dem Bereich des Ventillochs ist auf der Felgenbettfläche das Gehäuse der Magneteinrichtung befestigt. Vorzugsweise erstreckt sich das das Gehäuse der Magneteinrichtung vollständig über das Ventilloch. Über (wenigstens) einen wesentlichen Teil der Länge des Gehäuses ist eine Bodenfläche des Gehäuses an die Felgenbettfläche angepasst. Das ermöglicht, dass die Magneteinrichtung mit ihrer Bodenstruktur (im Wesentlichen) an der Felgenbettfläche anliegt.

Auf dem Felgenkörper kann ein (mit Luft gefüllter) Reifen montiert sein. In dem Reifen kann ein Schlauch aufgenommen sein. Das System kann auch als sogenanntes "tubeless" System (schlauchloses System) ausgebildet sein, bei dem kein Schlauch umfasst ist.

Die Magneteinrichtung erzeugt in einem Sensor bei der Drehung des Laufrades (magnetische) Impulse.

Ein weiterer erheblicher Vorteil der erfindungsgemäßen Laufradkomponente ist, dass die Magneteinrichtung innerhalb eines durch den Felgenkörper und einen Reifen definierten Volumens sicher an dem Felgenkörper aufgenommen ist. Dadurch ist die Magneteinrichtung verliersicher untergebracht und kann auch beim Transport oder dem Unterbringen oder dem Abstellen des Fahrrads nicht beschädigt oder zerstört, verschoben oder beispielsweise auch nur verdreht werden. Dadurch wird ein zuverlässigerer Betrieb ermöglicht. Außerdem besteht bei einem Wechsel des Schlauchs keine Gefahr, dass es vergessen wird, die Magneteinrichtung zu montieren oder sogar unbedachter Weise mit einem defekten Schlauch zusammen zu entsorgen.

Ein weiterer und nicht unerheblicher Vorteil besteht darin, dass insbesondere bei Einsatz an einem Fahrrad mit Elektrounterstützung und zum Beispiel einem Mittelmotor mit daran angeschlossenem oder integriertem Sensor ein radialer Abstand der Magneteinrichtung zu dem Sensor im Bereich des Tretlagers bzw. des Pedalantriebs erheblich geringer ist als bei Anbringung der Magneteinrichtung außerhalb der Felge an einer Speiche oder an dem Luftventil. Dadurch, dass die Magneteinrichtung radial außen auf dem Felgenbett angebracht wird, verkürzt sich der radiale Abstand von der Magneteinrichtung zu einem am Mittelmotor vorgesehenen Sensor in vielen Fällen ganz erheblich.

Ein Problem bei beim Stand der Technik ist auch, dass sichtbar montierte Magnete gegebenenfalls auch durch Vandalismus beschädigt werden können. Das ist ebenfalls ein Vorteil der Erfindung. Ein Sensor insbesondere in einem Elektromotor reduziert den Aufwand, da auch das Kabel zum Sensor (praktisch) entfällt. Ein am Rahmen geführtes Kabel zum Sensor ist dann nicht nötig. Durch die Erfindung kann der Abstand zum Sensor (z.B. im Motor) verringert werden, wodurch das erforderliche Magnetfeld verringert werden kann. Es kann Gewicht und Aufwand eingespart werden.

Der Abstand zwischen dem Sensor und der Magneteinrichtung kann gerade bei sportlichen Fahrrädern mit hohen und aerodynamisch ausgebildeten Felgen auf weniger als die Hälfte reduziert werden. Dadurch wird es ermöglicht, die Magneteinrichtungen kleiner und leichter auszugestalten. Die Magnetfeldstärke der Magneteinrichtung kann geringer gewählt werden, da der Abstand entsprechend geringer ist. Auch kann das Gewicht dadurch reduziert werden. Auch die Unwucht durch die Magneteinrichtung wird geringer.

Ein weiterer Vorteil der erfindungsgemäßen Ausgestaltung ist, dass aufgrund der geschützten Aufnahme in dem Volumen des Reifens und des Felgenkörpers die Magneteinrichtung besser vor Umwelteinflüssen geschützt ist, sodass eine Kapselung weniger aufwendig ausgestaltet sein kann, als bei der Anbringung der Magneteinrichtung zum Beispiel an einer Speiche.

Das Gehäuse der Magneteinrichtung weist eine Durchtrittöffnung auf, mit welcher die Magneteinrichtung mittels einer Sicherungseinrichtung radial außen auf dem Felgenbett an dem Felgenkörper gesichert werden kann. Die Sicherungseinrichtung kann durch beliebige Bauteile zur Verfügung gestellt werden. Besonders bevorzugt dient das Ventil als Sicherungseinrichtung und durchtritt die Durchtrittöffnung und sichert die Magneteinrichtung radial von außen an dem Felgenkörper.

In bevorzugten Weiterbildungen wird das Gehäuse der Magneteinrichtung durch eine Klebstoffschicht zwischen dem Felgenbett und dem Gehäuse der Magneteinrichtung verliersicher an dem Felgenkörper gehalten.

Vorzugsweise ist die Klebstoffschicht (unmittelbar) zwischen dem Gehäuse der Magneteinrichtung und dem Felgenbett angeordnet.

Vorzugsweise ist zwischen dem Gehäuse der Magneteinrichtung und dem Felgenbett ein umlaufendes Felgenband angeordnet (und insbesondere aufgeklebt). Insbesondere ist die oder wenigstens eine Klebstoffschicht (unmittelbar) zwischen dem Gehäuse der Magneteinrichtung und dem Felgenband angeordnet.

In einer bevorzugten Weiterbildung bilden die seitlichen Felgenflanken in einem radial inneren Bereich einen Felgenboden aus.

Besonders bevorzugt werden sogenannte Hohlkammerfelgen eingesetzt. Die Hohlkammer ist radial nach innen durch den Felgenboden und radial nach außen durch ein (insbesondere die beiden Felgenflanken verbindendes) Felgenbett begrenzt. Radial außen auf dem Felgenbett ist die Felgenbettfläche ausgebildet bzw. wird dadurch zur Verfügung gestellt.

Die Hohlkammer wird radial nach innen durch den Felgenboden und radial nach außen durch ein die beiden Felgenflanken verbindendes Felgenbett begrenzt. Die Reifenkammer wird dann radial nach außen durch den Reifen und radial nach innen durch das Felgenbett begrenzt.

Das Wort "begrenzt" heißt hier nicht, dass die Hohlkammer oder die Reifenkammer an sich "dicht" (und insbesondere nicht luftdicht) sein müssen. Es wird damit eine Definition eines umschlossenen Raumes gegeben. In der Reifenkammer kann z.B. ein Schlauch aufgenommen sein, der dann unter den gewünschten Druck gesetzt wird.

Vorzugsweise ist eine Bodenfläche des Gehäuses der Magneteinrichtung in Umfangsrichtung der Felge gekrümmt ausgebildet. Dadurch ist es vorzugsweise möglich, dass die Magneteinrichtung über einen wesentlichen Teil der Länge (in Umfangsrichtung) an dem Felgenbett anliegt.

Vorzugsweise ist eine Bodenfläche des Gehäuses der Magneteinrichtung an ein Querschnittsprofil der Felgenbettfläche angepasst. Dann kann die Magneteinrichtung (auch) über die oder einen wesentlichen Teil der Breite (in axialer Richtung) an dem Felgenbett anliegen.

In bevorzugten Ausgestaltungen ist die Hohlkammer abgedichtet. Das kann vorzugsweise über ein (separates) Felgenband erfolgen, welches die Speichenlöcher in dem Felgenbett abdeckt und insbesondere abdichtet. Wird das Felgenband bei einem "Tubeless-System" in regelmäßigen Abständen (z. B. jedes Jahr) ausgetauscht, so wird dann regelmäßig auch die Magneteinrichtung entnommen und anschließend wieder montiert.

Insbesondere ist (in einem axial zentralen Bereich) an dem Felgenbett eine umlaufende Felgenbettmulde ausgebildet. Vorzugsweise ist an der Felgenbettmulde die Magneteinrichtung (teilweise) aufgenommen. Vorzugsweise ragt die Magneteinrichtung seitlich nicht über die Felgenbettmulde hinaus.

Über die Felgenbettmulde sind gegebenenfalls die Speichennippel zugänglich. Eventuell erst nach Entfernung des Felgenbandes.

Vorzugsweise ist ein seitlicher Abstand eines Felgenhorns zu der Magneteinrichtung größer als eine (minimale oder maximale) axiale Wandstärke des Felgenhorns. Das ermöglicht einen sicheren Betrieb und eine einfache Montage.

Die Magneteinrichtung ist an dem Felgenbett befestigt. Dabei kann die Magneteinrichtung beispielsweise an das Felgenbett genietet, geschraubt, geschweißt und/oder geklebt sein. In einfachen Fällen ist es möglich, dass die Magneteinrichtung an ein in dem Felgenbett vorgesehenes Loch angenietet wird. In allen Ausgestaltungen kann zusätzlich eine Klebeschicht an dem Gehäuse der Magneteinrichtung vorgesehen sein. Besonders bevorzugt ist die Magneteinrichtung an das Felgenbett und/oder an ein auf den Felgenkörper aufgeklebtes Felgenband geklebt.

Eine austauschbare Befestigung der Magneteinrichtung an zum Beispiel dem Felgenbett hat den Vorteil, dass die Magneteinrichtung bei Bedarf austauschbar ist. In der Reifenkammer ist die Magneteinrichtung an dem Felgenbett sehr geschützt aufgenommen und ist den normalen Umweltbedingungen auch nicht ausgesetzt. Es besteht auch nicht die Gefahr einer Beschädigung zum Beispiel beim Transport eines solchen Fahrrads. In bevorzugten Ausgestaltungen ist die Magneteinrichtung in dem Bereich des Ventillochs (oder eines anderen Lochs) an das Felgenbett angeklebt. Vorzugsweise weist die Magneteinrichtung eine Durchtrittsöffnung für das Ventil auf. Darüber kann die Magneteinrichtung befestigt und/oder gesichert werden. Wird die Magneteinrichtung (zusätzlich) mit ihrem Gehäuse an dem Felgenbett angeklebt, so wird auch bei einem Tausch des Ventils und/oder des Schlauchs die Magneteinrichtung noch durch den Klebebereich gehalten, sodass auch selbst dann kein Verlust der Magneteinrichtung droht.

Eine Befestigung über Nieten ist insbesondere dann möglich, wenn das Laufrad kein "Tubeless-System" ist.

Besonders bevorzugt wird ein Felgenband auf die Felgenbettfläche aufgeklebt und zwischen der Magneteinrichtung und dem Felgenkörper aufgenommen. Das erleichtert die Montage des Felgenbandes, da keine Rücksicht auf die Magneteinrichtung genommen werden muss.

Vorzugsweise ist an der Bodenfläche des Gehäuses ein (insbesondere elastisches) und vorzugsweise in seitlicher Richtung luftdicht abdichtendes Klebeband befestigt. Das Klebeband weist wenigstens eine Klebstoffschicht auf. Mit dem Klebeband kann die Magneteinrichtung mit dem Felgenkörper (mittelbar oder unmittelbar) verbunden werden. Insbesondere wird das Klebeband (teilweise) auf ein Felgenband und/oder (teilweise) auf den Felgenkörper geklebt.

In bevorzugten Ausgestaltungen weist das Felgenbett eine Bohrung/Öffnung für das Ventil auf. Die Magneteinrichtung wird vorzugsweise mit einem doppelseitigen Klebeband zusätzlich gesichert, damit die Magneteinrichtung nicht bei Entfernung des Ventils unabsichtlich verloren geht. Vorzugsweise wird die Magneteinrichtung auf ein Felgenband geklebt, welches die Speichenlöcher in dem Felgenbett abdichtet. Bei Ersatz des Felgenbandes muss dann auch die Magneteinrichtung demontiert und werden und an das neue Felgenband wieder angeklebt werden.

Besonders bevorzugt wird die Magneteinrichtung außen auf ein zuvor aufgebrachtes Felgenband aufgeklebt. Bei "Tubeless-Systemen" wird das Ventil radial von außen durch das Loch in der Magneteinrichtung und durch das Ventilloch durchgesteckt. Die Ventilmutter sichert dann das Ventil und auch die Magneteinrichtung.

Vorzugsweise ist an der Magneteinrichtung ein Ventildichtsitz ausgebildet, an dem ein Dichtring des Ventils luftdicht (und druckdicht für Betriebsdrücke) anliegt. Vorzugsweise dichten das Felgenband und die (radiale) Unterseite der Magneteinrichtung das Felgenbett und das Ventilloch luftdicht ab.

Es ist auch denkbar, die Magneteinrichtung zwischen dem Felgenbett und einem (umlaufenden) Felgenband aufzunehmen. Beispielsweise kann die Magneteinrichtung (nur) an dem Felgenbett angeklebt werden. Dann wird die Magneteinrichtung durch das umlaufende Felgenband zusätzlich gesichert, auch dann, wenn die Magneteinrichtung nicht durch eine Schraube, Niete oder das Ventil gehalten wird. Ein gewisser Nachteil ist dabei der erhöhte Montageaufwand für das Felgenband, welches auch entsprechende Ausbauchungen für die Magneteinrichtung aufweisen muss.

Denkbar ist es auch, dass zwei oder mehr Magneteinrichtungen (im Wesentlichen symmetrisch) über dem Umfang der Felge verteilt angeordnet sind. Dann werden entsprechend der Anzahl der Magneteinrichtungen (und der darin enthaltenen Magnete) eine entsprechende Mehrzahl an Impulsen bei einer Umdrehung ausgegeben, die von einem Sensor erfassbar sind.

In e-bike Motoren können eine Vielzahl von Messdaten für die Steuerung/Regelung beigezogen werden, so z. B. das Drehmoment oder die (aktuelle) Steigung, eine Geschwindigkeit auch über GPS, die Trittfrequenz und/oder Leistung etc. Die Sensoren dazu lassen sich in Baugruppen sehr exakt positionieren. Gegebenenfalls können einzelne dieser Signale auch als Verifikation genutzt werden.

Vorzugsweise erstrecken sich die Felgenflanken von dem Felgenboden radial nach außen über das Felgenbett hinaus und bilden Felgenhörner aus, an denen der Reifen aufgenommen ist. Wenn die Felge solche Felgenhörner aufweist, die sich radial nach außen über das Felgenbett hinaus erstrecken, ist es bevorzugt, dass sich die Magneteinrichtung nicht radial über die Felgenhörner hinaus erstreckt. Dann wird selbst bei einem defekten Reifen und/oder Schlauch die Magneteinrichtung selbst beim (kurzzeitigen) Weiterfahren mit einem platten Reifen zuverlässig geschützt.

Vorzugsweise bilden die radial äußeren Endbereiche der Felgenhörner axial nach innen überstehende und umlaufende Wülste aus, an denen axial innen Reifenwülste des Reifens anliegen. Dadurch wird der Reifen an der Felge sicher und zuverlässig aufgenommen.

Vorzugsweise ist die Magneteinrichtung axial zwischen den umlaufenden Wülsten und/oder den Reifenwülsten aufgenommen und angeordnet. Dadurch stört die Magneteinrichtung weder die Montage, noch die Demontage, noch den Betrieb und erlaubt einen zuverlässigen und wartungsarmen Betrieb.

Besonders bevorzugt ist die Magneteinrichtung radial zwischen dem Felgenbett und den radial äußeren Endbereichen der Felgenhörner und axial zwischen und (jeweils) beabstandet von den Felgenhörnern aufgenommen. Bevorzugt beträgt ein radialer Abstand von der radial äußersten Stelle der Magneteinrichtung zu den radial äußeren Endbereichen der Felgenhörner wenigstens 3 mm und insbesondere wenigstens 0,5 mm oder 0,25 mm. Das erleichtert Montage, Betrieb und Wartung erheblich.

Insbesondere ist ein axialer Abstand der Magneteinrichtung zu beiden Wülsten größer als eine dünnste Wandstärke der Felgenhörner. Bevorzugt ist ein axialer Abstand der Magneteinrichtung zu den beiden Wülsten jeweils größer als eine axiale Wandstärke der Felgenhörner in dem Bereich der Wülste. Das sichert eine zuverlässige Montage des Reifens.

In vorteilhaften Ausgestaltungen sind in dem Felgenkörper (und insbesondere dem Felgenboden) Speichenlöcher ausgebildet, durch welche die Speichen durchgeführt sind, die unter Zugspannung stehen und sich an der zentralen Nabe und an dem Felgenkörper (und insbesondere dem Felgenboden) abstützen.

Denkbar ist es auch, dass die Magneteinrichtung zum Beispiel an einem (speziellen oder normalen) Speichennippel innerhalb des Felgenkörpers verliersicher aufgenommen oder befestigt ist.

Insbesondere weist das Gehäuse der Magneteinrichtung eine Länge, eine Breite quer dazu und eine Höhe quer zu Länge und Breite aufweist. Dabei ist die Länge des Gehäuses insbesondere wenigstens doppelt so groß wie die Breite und die Höhe. Das Gehäuse der Magneteinrichtung ist insbesondere in einem Bereich eines Ventillochs auf einer Felgenbettfläche einer (Standard-) Felge befestigbar. Eine Bodenfläche des Gehäuses der Magneteinrichtung ist über einen wesentlichen Teil der Länge des Gehäuses an eine Umfangsfläche einer Felgenbettfläche (einer standardisierten Felge) angepasst.

Insbesondere ist die Felge so ausgebildet, dass sie einem Standard der ETRTO ("European Tyre and Rim Technical Organization") genügt. Damit stehen die Informationen zur Verfügung, um die Bodenfläche der Magneteinrichtung entsprechend angepasst auszugestalten. Damit wird es möglich, ein (vollständiges) Anliegen an der Felgenbettfläche (im Wesentlichen) zu ermöglichen.

In allen Ausgestaltungen von Laufradkomponenten ist es bevorzugt, dass die Magneteinrichtung wenigstens ein Befestigungsloch zur Aufnahme eines Ventils aufweist und insbesondere einen Dichtsitz zur Abdichtung des Ventils an dem Befestigungsloch umfasst.

In vorteilhaften Weiterbildungen einer Laufradkomponente ist an dem Dichtsitz (wenigstens) ein Dichtmittel aufgenommen.

In allen Ausgestaltungen ist es bevorzugt die Magneteinrichtung weniger als 8 mm hoch und/oder weniger als 20 mm breit und/oder weniger als 80 mm lang ist.

Ein erfindungsgemäßes Fahrrad umfasst wenigstens zwei Laufräder und einen wenigstens teilweise muskelbetriebenen Pedalantrieb, wobei wenigstens eines der Laufräder als Vorderrad und wenigstens eines der Laufräder als Hinterrad ausgebildet ist. Insbesondere weist wenigstens eines der Laufräder eine Laufradkomponente auf, wie zuvor beschrieben. Die Laufräder weisen jeweils eine Nabe und eine mit der Nabe verbundene Felge mit einem Felgenkörper mit seitlichen Felgenflanken auf, die am radial äußeren Ende vorzugsweise Felgenhörner ausbilden. Der Felgenkörper weist (zwischen den Felgenhörnern) eine radial äußere Felgenbettfläche und insbesondere ein daran ausgebildetes Ventilloch auf. Auf dem Felgenkörper ist jeweils ein Reifen montiert. An wenigstens einem Laufrad ist eine Magneteinrichtung aufgenommen, um bei der Drehung des Laufrades Impulse an einem Sensor zu erzeugen. Ein Gehäuse der Magneteinrichtung weist eine Länge, eine Breite quer dazu und eine Höhe quer zu Länge und Breite auf, wobei die Länge des Gehäuses insbesondere wenigstens doppelt so groß wie die Breite und die Höhe ist. Vorzugsweise ist das Gehäuse der Magneteinrichtung auf der Felgenbettfläche in dem Bereich des Ventillochs befestigt.

Über (wenigstens) einen wesentlichen Teil der Länge des Gehäuses ist eine Bodenfläche des Gehäuses insbesondere an die Felgenbettfläche angepasst. Das ermöglicht, dass Bodenfläche des Gehäuses im Wesentlichen an der Felgenbettfläche anliegt.

In besonders bevorzugten Ausgestaltungen umfasst das Fahrrad wenigstens einen Sensor zur Ermittlung wenigstens eines Fahrparameters und insbesondere einer Fahrgeschwindigkeit. Der Sensor erfasst insbesondere magnetische Impulse bei der Drehbewegung des Laufrades.

Vorzugsweise ist wenigstens ein Sensor am Rahmen und insbesondere in dem Bereich des Tretlagers oder an dem Sitzrohr angeordnet. Denkbar ist es auch, dass der Sensor an anderen Stellen des Rahmens oder der Fahrradgabel befestigt ist.

Besonders bevorzugt ist der Sensor (oder wenigstens ein Sensor) in dem Elektromotor (bzw. dessen Gehäuse) integriert. Ein großer Vorteil ist, dass kein Kabel zu einem Sensor verlegt werden muss. Ein solches Kabel muss montiert werden und kann kaputt gehen und ist auch optisch nicht ansprechend.

In bevorzugten Ausgestaltungen ist ein Elektromotor zur Unterstützung des Pedalantriebs umfasst. Besonders bevorzugt ist der Elektromotor als Mittelmotor ausgebildet und ist in Längsrichtung zwischen dem Vorderrad und dem Hinterrad (an dem Pedalantrieb) aufgenommen. In bevorzugten Ausgestaltungen ist dem Elektromotor ein Sensor zur Ermittlung wenigstens eines Fahrparameters und insbesondere einer Fahrgeschwindigkeit zugeordnet. Die durch die Drehung am Sensor vorbei erzeugten magnetischen Impulse der Magneteinrichtung sind bei der Drehung des Laufrades von dem Sensor erfassbar, um mittels einer Steuereinrichtung eine fahrabhängige Steuerung des Elektromotors zu ermöglichen. Die Steuerung kann fahrsituationsabhängig erfolgen. Möglich ist z. B. eine Steuerung in Abhängigkeit von der Beschleunigung und/oder der Geschwindigkeit und in Abhängigkeit von weiteren Fahrparametern.

In bevorzugten Ausgestaltungen ist der Sensor an oder in dem Gehäuse des Elektromotors aufgenommen. Besonders bevorzugt ist der Sensor in das Gehäuse des Mittelmotors integriert oder unmittelbar benachbart dazu befestigt. Unter dem Begriff "unmittelbar benachbart befestigt" wird verstanden, dass ein Abstand zwischen dem Sensor und dem Gehäuse des Mittelmotors kleiner als der ganze oder der halbe oder ein Viertel des Durchmessers des Mittelmotors beträgt. Eine Integration des Sensors in den Mittelmotor ermöglicht einen besonders störungsfreien Betrieb.

In allen Ausgestaltungen ist es bevorzugt, dass auf dem Felgenkörper und insbesondere einem Felgenbett des Felgenkörpers vorzugsweise ein Felgenband montiert ist. Das Felgenband dichtet das Volumen zwischen Felgenkörper und Reifen (Reifenkammer) vorzugsweise ab.

Genau betrachtet entsteht der Impuls regelmäßig erst durch einen sich an einem Sensor vorbei bewegenden (Permanent-) Magneten. Die Bewegung ist definiert durch den Einbau des Laufrads im Rahmen. Das Laufrad dreht sich um die Nabenachse und die Magneteinrichtung so in einer definierten Laufbahn an der Magneteinrichtung vorbei.

Die Erfindung bietet viele Vorteile und erlaubt einen zuverlässigen und störungsfreien Betrieb.

In einer Weiterbildung einer Laufradkomponente weist der Felgenkörper eine geringere axiale Breite als eine radiale Höhe des Felgenkörpers auf. Dabei ist die axiale Breite des Felgenkörpers vorzugsweise geringer als ein radialer Abstand von dem Felgenboden zu dem Felgenbett. Das gilt insbesondere für aerodynamische Laufradkomponenten von sportlichen Fahrrädern. Auch ein sportliches Fahrrad kann einen Elektromotor zur Fahrunterstützung aufweisen.

In bevorzugten Ausgestaltungen einer Laufradkomponente ist auf das Felgenbett des Felgenkörpers ein Felgenband aufgebracht. Vorzugsweise ist die Magneteinrichtung auf das Felgenband an dem Felgenbett aufgeklebt. Das kann insbesondere über doppelseitiges Klebeband erfolgen. Vorzugsweise ist das Gehäuse der Magneteinrichtung in Umfangsrichtung und in axialer Richtung an eine Form des Felgenbettes angepasst.

In bevorzugten Ausgestaltungen weist die Magneteinrichtung wenigstens ein Befestigungsloch zur Aufnahme (z. B.) eines Ventils auf. Insbesondere ist ein Dichtsitz zur Abdichtung des Ventils an dem Befestigungsloch umfasst. An dem Dichtsitz ist vorzugsweise wenigstens ein Dichtmittel aufgenommen. Das Dichtmittel kann z. B. ein elastischer Dichtkörper sein oder einen solchen umfassen. In bevorzugten Weiterbildungen kann der elastische Dichtkörper ringförmig oder konisch ausgebildet sein. Das Dichtmittel kann als O-Ring ausgebildet sein oder einen solchen umfassen.

In bevorzugten Ausgestaltungen ist die Magneteinrichtung weniger als 8 mm hoch und/oder weniger als 20 mm breit und/oder weniger als 80 mm lang. Im Rahmen von Versuchen und Experimenten ist es denkbar, dass diese Dimensionen noch erheblich verkleinert werden.

Durch Verwendung einer solchen Laufradkomponente an einem mit einem Mittelmotor mit integriertem Sensor ausgerüsteten Fahrrad kann ein radialer Abstand zwischen Magneteinrichtung und Sensor erheblich kleiner sein als im Stand der Technik. Deshalb ist es möglich, die Magnetfeldstärke (des Magneten oder der Magnete) der Magneteinrichtung entsprechend zu verringern und damit das Gesamtgewicht und die Gesamtausmaße der Magneteinrichtung entsprechend zu verkleinern.

Besonders bevorzugt ist ein Magnet einer Magneteinrichtung quaderförmig und massiv ausgestaltet. Massiv bedeutet vorzugsweise, dass der Magnet kein Loch aufweist. Zur Sicherung oder Befestigung an der Felge kann ein (radial weniger hoher) Befestigungsabschnitt an dem Gehäuse der Magneteinrichtung vorgesehen sein. An dem Befestigungsabschnitt kann dann eine Durchtrittöffnung oder ein Befestigungsloch ausgebildet sein, durch welches das Ventil durchtritt und die Magneteinrichtung insgesamt sichert. Benachbart zu dem Befestigungsabschnitt umfasst das Gehäuse vorzugsweise einen Magnetabschnitt, in welchem ein Magnet aufgenommen ist. Der Magnetabschnitt ist vorzugsweise höher als der Befestigungsabschnitt.

Ein Vorteil der Erfindung ist auch, dass die Magneteinrichtung nicht symmetrisch an dem Ventil aufgenommen werden muss. Das ermöglicht auch den Einsatz eines einzigen und kompakten Magneten in dem Gehäuse der Magneteinrichtung. Eine Aufteilung in zwei Teile oder eine zentrale Bohrung ist nicht nötig.

Eine Länge der Magneteinrichtung ist auch nicht auf einen Umfangsabstand zweier Speichen begrenzt. Grundsätzlich kann eine sehr große und nahezu unbegrenzte Länge gewählt werden. Dadurch, dass die Magneteinrichtung nahe am Sensor angeordnet werden kann, kann aber bei gesteigerter Zuverlässigkeit des Empfangs des Signals die Magnetfeldstärke reduziert werden. Dadurch kann auch das Gewicht verringert werden, insbesondere bei Hochkammerfelgen, deren Höhe die Breite übersteigt (Faktor 1 oder 1,25 oder 1,5 oder 2). Dabei gilt, je höher die Felge, desto vorteilhafter ist die Erfindung.

In einer konkreteren Ausgestaltung eines erfindungsgemäßen Fahrrads umfasst dieses (wenigstens) zwei Laufräder und einen muskelbetriebenen Pedalantrieb und einen Elektromotor zur Unterstützung des Pedalantriebs, wobei wenigstens eines der Laufräder als Vorderrad und wenigstens eines der Laufräder als Hinterrad ausgebildet ist und jeweils eine Nabe und eine Mehrzahl von Speichen umfasst. Die Nabe ist über die Speichen mit der Felge verbunden. Auf der Felge ist ein (mit Luft gefüllter) Reifen montiert. Die Felge weist einen Felgenkörper mit seitlichen Felgenflanken auf, die in einem radial inneren Bereich einen Felgenboden ausbilden oder ausformen. Der Elektromotor ist als Mittelmotor ausgebildet und ist in Längsrichtung zwischen dem Vorderrad und dem Hinterrad aufgenommen. Dem Elektromotor ist ein Sensor zur Erfassung wenigstens eines Fahrparameters und insbesondere einer Fahrgeschwindigkeit zugeordnet oder daran montiert oder darin integriert. An wenigstens einem Laufrad ist radial außen auf dem Felgenbett ein Impulsgeber (und insbesondere eine Magneteinrichtung) aufgenommen, um bei der Drehung des Laufrades (magnetische) Impulse auszugeben, welche von dem Sensor erfassbar sind, um mittels einer Steuereinrichtung eine fahrabhängige Steuerung des Elektromotors (Ermittlung von zum Beispiel Beschleunigung und/oder Geschwindigkeit) zu ermöglichen. Dadurch, dass ein Impulsgeber (und insbesondere die wenigstens eine Magneteinrichtung) auf dem Felgenboden bzw. dem Felgenband auf dem Felgenboden der Impulsgeber aufgeklebt und an dem Ventilloch durch das Ventil gesichert ist, wird eine vorteilhafte Ausgestaltung zur Verfügung gestellt. Der Impulsgeber erzeugt bei der Drehung an dem Sensor erfassbare Impulse.

Eine Felge zum Einsatz an oder zur Mitwirkung mit der Erfindung erfüllt insbesondere wenigstens einige der folgenden Bedingungen:
- In allen Ausgestaltungen ist ein Ventil-Lochdurchmesser eine Felge 1 vorzugsweise gemäß der ETRTO-Vorgabe für einen sicheren Schlauchsitz ausgebildet und ist vorzugsweise größer als 6 mm.
- Weiterhin ist in allen Ausgestaltungen vorzugsweise eine Felgenhornhöhe gemäß der ETRTO-Vorgabe für eine sichere und zentrische Flankenführung des Reifens ausgebildet und ist vorzugsweise größer 5 mm.
- Insbesondere ist eine Felgenhorntiefe gemäß der ETRTO-Vorgabe zur Absprungsicherheit von Reifen ausgebildet (durch den Reifendruck dehnen sich Drahtreifen) und ist vorzugsweise größer 1,5 oder 2 mm.
- Eine Felgenbetttiefe (FBT) ist vorzugsweise gemäß der ETRTO-Vorgabe für einen leichten Reifenwechsel ausgebildet und ist vorzugsweise größer 2 mm.
- Ein radial tiefster Punkt des Felgenbettes ist in der Felgenbettmulde vorgesehen. Vorzugsweise in der axialen Mitte der Felge kann bei asymmetrischen Felge auch außerhalb der Mitte sein.
- Ein Radius zum Felgenhorn (R) ist vorzugsweise gemäß der ETRTO-Vorgabe zur Absprungsicherheit von Reifen ausgebildet und ist vorzugsweise (etwa) 0,8 mm.

Insgesamt stellt die Erfindung ein vorteilhaftes Fahrrad und vorteilhafte Laufradkomponenten zur Verfügung, welche einen zuverlässigen Betrieb ermöglichen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: ein vergrößertes Detail einer Seitenansicht eines erfindungsgemäßen Fahrrads mit Mittelmotor;
- Figur 4: eine schematische Seitenansicht eines Laufrades eines der Fahrräder aus Figur 1 oder 2;
- Figur 5: einen schematischen Querschnitt durch eine Felge und einen Reifen eines erfindungsgemäßen Fahrrads;
- Figuren 6a,6b: eine schematische Darstellung einer Magneteinrichtung für ein erfindungsgemäßes Fahrrad; und
- Figur 7: schematische Querschnitte durch Felgen mit einer Magneteinrichtung.

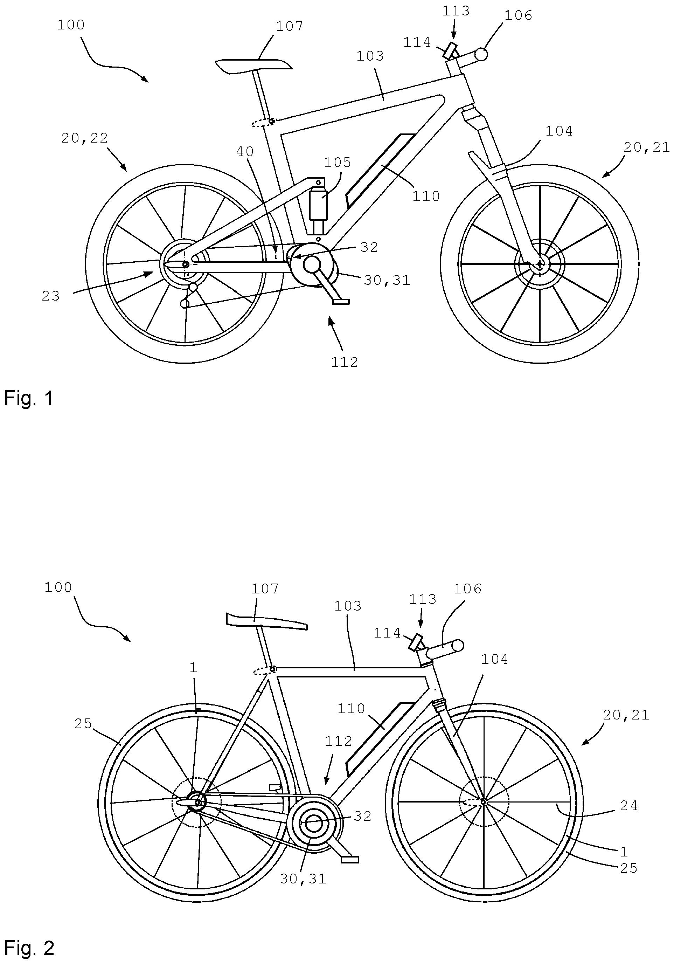

In den Figuren 1 und 2 sind jeweils ein erfindungsgemäßes Mountainbike bzw. Rennrad 100 dargestellt. Das Mountainbike bzw. Rennrad 100 verfügt jeweils über zwei Laufräder 20, nämlich ein Vorderrad 21 und ein Hinterrad 22.

Die beiden Fahrräder 100 verfügen jeweils über einen Rahmen 103, eine Fahrradgabel 104, einen Lenker 106 und einen Sattel 107. An den Lenkern 106 kann jeweils ein Fahrradcomputer als Steuereinrichtung 113 mit einer Anzeige 114 aufgenommen sein.

Beide Laufräder 20 verfügen jeweils über eine Nabe 23 und Speichen 24 und eine Felge 1, an der ein Reifen 25 aufgenommen ist.

Weiterhin sind beide Fahrräder 100 mit einem Elektromotor 30 als Hilfsmotor ausgerüstet, der zur Unterstützung dient. Der Elektromotor 30 ist hier jeweils als Mittelmotor 31 ausgeführt und ist an dem Pedalantrieb 112 aufgenommen bzw. der Pedalantrieb 112 ist an dem Elektromotor aufgenommen. Ein Akku 110, der hier stark schematisch an dem Rahmen 103 eingezeichnet ist, kann ebenso beispielsweise auch in das Unterrohr oder an anderer Stelle integriert und somit im normalen Betrieb nicht sichtbar sein.

Schematisch ist an dem Mountainbike 101 ein Sensor 32 zu sehen, der beim Vorbeidrehen der Magneteinrichtung 40 dessen Impulse erfasst. Die Signale werden von der Steuereinrichtung 113 zur Steuerung des Elektromotors 30 eingesetzt. Außerdem können die Signale ausgewertet werden und beispielsweise auf Unregelmäßigkeiten des Laufrades wie einen Höhenschlag oder einen Seitenschlag hindeuten.

Bei den Fahrrädern 100 ist die Magneteinrichtung radial außen auf dem Felgenbett innerhalb eines Volumens aufgenommen, welches durch den Felgenkörper (insgesamt) und den Reifen begrenzt wird.

Dadurch ist die Magneteinrichtung 40 im normalen Betrieb nicht sichtbar. Weiterhin ist die Magneteinrichtung 40 geschützt und sicher aufgenommen.

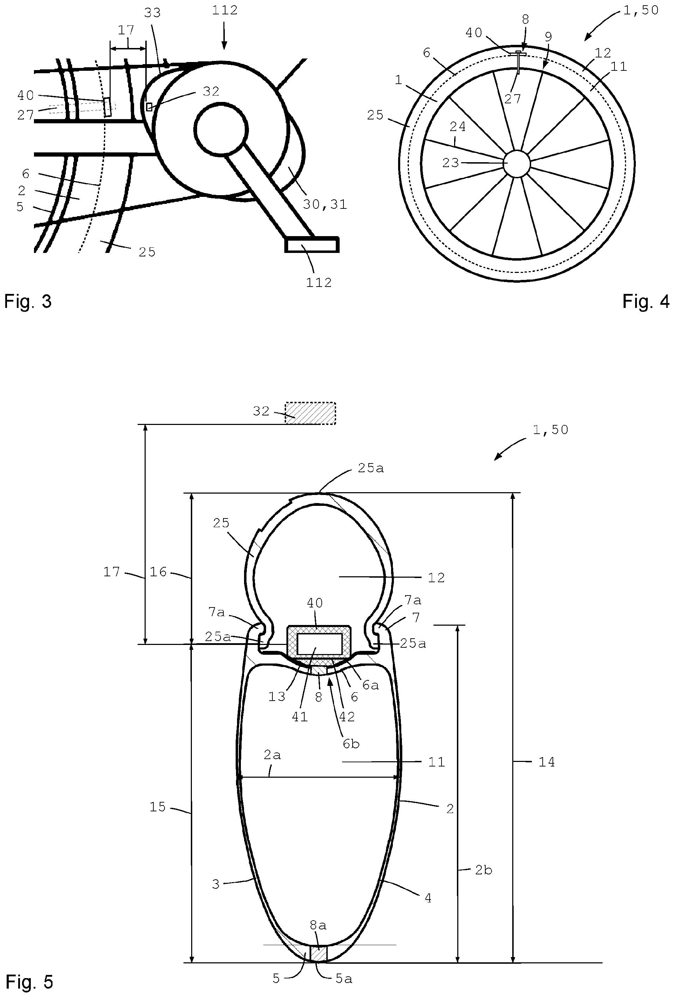

Figur 3 zeigt eine schematische Seitenansicht eines erfindungsgemäßen Fahrrads 100, beispielsweise einem Fahrrad aus Figur 1 oder Figur 2, bei dem ein Mittelmotor 31 als Elektromotor 30 zur Unterstützung beim Fahren vorgesehen ist. Ein Kurbelantrieb mit Pedalen bzw. Pedalantrieb 112 dient zum Pedalieren.

Schematisch erkennbar ist die Felge 1 mit dem Felgenkörper 2 und dem darauf montierten Reifen 25. Gestrichelt eingezeichnet ist die auf dem Felgenbett 6 des Felgenkörpers 2 aufgenommene Magneteinrichtung 40.

Ebenfalls eingezeichnet ist ein hier minimaler Abstand 17 zwischen dem in dem Gehäuse 33 des Elektromotors 30 angeordneten Sensors 32 und der Magneteinrichtung 40. Dadurch, dass dieser Abstand 17 hier sehr gering ist, kann die magnetische Feldstärke der Magneteinrichtung 40 noch zuverlässiger erfasst werden. Außerdem kann die Magnetfeldstärke verringert werden.

Weiterhin führt der geringe Abstand 17 zur zuverlässigeren und reproduzierbareren Erfassung der Signale der Magneteinrichtung 40 durch den Sensor 32 in dem Gehäuse 33 des Elektromotors 30 oder in dessen Nähe. Jedenfalls werden bei der hier dargestellten Anordnung keine externen Kabel oder nur kurze und vorzugsweise keine Kabelverbindungen zwischen dem Sensor 32 und dem Elektromotor 30 benötigt.

Von dem Elektromotor 30 kann das Signal des Sensors 32 über die vorhandenen Verbindungen (drahtlos oder drahtgebunden) zu der Steuereinrichtung 113 erfolgen, wo die Signale ausgewertet werden.

Figur 4 zeigt eine stark schematische Seitenansicht einer Laufradkomponente 50 mit einer Felge 1 und einem auf der Felge 1 montierten Reifen 25. Klar erkennbar sind die Speichen 24, die schematisch eingezeichnete Nabe 23 und die im Inneren von Felgenkörper und Reifen aufgenommene und auf dem Felgenbett 6 befestigte Magneteinrichtung 40.

Figur 5 zeigt einen stark schematischen Querschnitt durch eine aerodynamische Felge 1 mit einem darauf montierten aerodynamischen Reifen 25 und einem schematisch eingezeichneten Sensor 32. Die Felge 1 weist einen Felgenkörper 2 auf. Der Felgenkörper 2 weist zwei Felgenflanken 3, 4 auf, die hier in einem zentralen Bereich gemeinsam den Felgenboden 5 ausbilden.

Die Felge 1 ist als Hohlkammerfelge ausgebildet. Die Felgenflanken werden über ein Felgenbett 6 miteinander verbunden. Die Felgenflanken erstrecken sich radial über das Felgenbett hinaus weiter nach außen, wo sie Felgenhörner 7 mit nach innen abstehenden Wülsten 7a ausbilden. An den Wülsten 7a werden die Wülste 25 des Reifens 25 gesichert.

Der Felgenkörper 2 begrenzt zusammen mit dem Reifen 25 eine Reifenkammer 12. Die Magneteinrichtung 40 ist auf dem Felgenbett 6 an der Felgenbettfläche 6a aufgenommen und befestigt. Die Magneteinrichtung 40 erzeugt bei der Drehung des Laufrades 20 von dem Sensor 32 detektierbare Signale, mit denen eine Erfassung und Steuerung der Fahrparameter und des Elektromotors 30 ermöglicht wird.

Hier ist die Magneteinrichtung 40 auf einem Felgenband 13 auf dem Felgenbett 6 angebracht. Das Felgenbett 6 ist aufgrund der Speichenlöcher 9 nicht dicht und wird (bei luftdichten Systemen ohne separaten Schlauch) von einem Felgenband 13 abgedeckt.

Eine radiale Höhe 14 von der inneren Umfangsfläche 5a des Felgenbodens 5 zu der Lauffläche 26 des Reifens 25 ist mehr als doppelt so groß wie eine radiale Höhe 16 von der Magneteinrichtung 40 zur äußeren Umfangsfläche 26, nämlich der Lauffläche 25a des Reifens 25. Die innere Umfangsfläche des Felgenkörpers 2 bildet die Felgenbodenfläche 5a. Hier wird die Felgenbodenfläche 5a durch den Felgenboden 5 zur Verfügung gestellt. Wenn keine Hohlkammer vorgesehen ist, dann bilden die radial äußere Fläche des Felgenkörpers 2 die Felgenbettfläche 6a und die radial innere Fläche die Felgenbodenfläche 5a aus.

Die radiale Höhe 15 von der inneren Umfangsfläche 5a des Felgenbodens bis zur (mittleren) radialen Position der Magneteinrichtung 40 ist hier größer als die radiale Höhe des Abstandes von der Magneteinrichtung 40 zur Lauffläche 25a des Reifens 25. In dem hier gezeigten Beispiel ist die radiale Höhe 15 auch größer oder ähnlich groß wie ein radialer Abstand der Magneteinrichtung 17 zu dem Sensor 32.

Deutlich wird in der schematischen Darstellung nach Figur 5, dass bei solchen Felgen und Laufradkomponenten 50 ein radialer Abstand 17 von der Magneteinrichtung 40 zu einem Sensor 32 am Rahmen oder innerhalb des Mittelmotors 31 deutlich reduziert werden kann. Dadurch können die Sicherheit der Erzeugung und Übertragung der Impulse und die Zuverlässigkeit des Systems insgesamt erhöht werden. Außerdem ist die Magneteinrichtung verliersicher und geschützt und möglichst wenig störend an dem Felgenbett 6 befestigt.

In Figur 5 ist erkennbar, dass der (aerodynamische) Felgenkörper 2 eine geringere axiale Breite 2a als eine radiale Höhe 2b des Felgenkörpers 2 aufweist. Die axiale Breite 2a ist auch geringer als ein radialer Abstand von dem Felgenboden zu dem Felgenbett.

Ein radialer Abstand von der Magneteinrichtung zu dem Sensor 32 ist vorzugsweise geringer als die dreifache oder zweifache radiale Höhe 2b des Felgenkörpers 2. In anderen Ausgestaltungen sind andere Verhältnisse möglich.

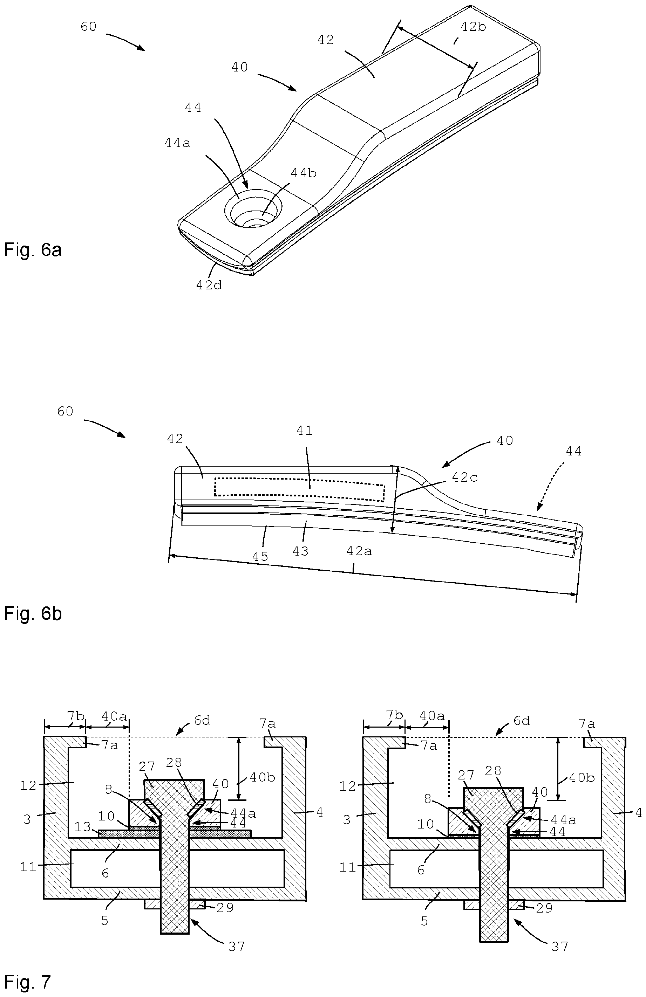

Figuren 6a und 6b zeigen eine konkrete Ausgestaltung einer Laufradkomponente 60 mit einer Magneteinrichtung 40, die entlang ihrer Längsrichtung und quer dazu an die Ausgestaltung des Felgenbettes 6 angepasst ist. In dem Gehäuse 42 der Magneteinrichtung 40 ist ein Befestigungsloch bzw. eine Befestigungsaufnahme 44 (die nicht umfänglich geschlossen sein muss) ausgebildet, wo ein Ventil 27 eines Fahrradschlauchs oder ein "Tubeless"-Ventil 27 durchgeführt werden kann. Das sichert die Magneteinrichtung 40 nochmals.

Der angepasste Querschnitt 42d des Bodens ist erkennbar. Das Gehäuse weist hier eine axiale Breite 42b, eine Länge 42a in Umfangsrichtung und eine Höhe 42c auf. Die Abmessungen sind so bemessen, dass die Magneteinrichtung 40 derart auf der Felgenbettfläche 6a des Felgenbetts 6 aufgenommen ist, dass die Magneteinrichtung 40 die Montage und Demontage eines Reifens 25 (weitestgehend) nicht behindert und radial nicht über die Felgenhörner 7 hinaussteht.

Im Inneren des Gehäuses 42 kann ein Magnet 41 (oder es können mehrere Magnete 41) geschützt aufgenommen sein.

Figur 7 zeigen links und rechts jeweils schematische Querschnitte einer Felge 1 als Laufradkomponente 50 mit einer daran montierten Magneteinrichtung 40 als Laufradkomponente 60. Die Felge 1 ist jeweils als Hohlkammerfelge ausgeführt und weist einen Felgenkörper 2, einen Felgenboden 5 und ein Felgenbett 6 auf, zwischen denen hier die Hohlkammer 11 ausgebildet ist. Die Felgenflanken 3, 4 bilden am radial äußeren Ende Wülste 7a an den Felgenhörnern 7 aus. An den Wülsten 7a wird ein Reifen aufgenommen und gesichert. Dort ist dann nach der Montage eines Reifens die Reifenkammer 12.

Die Felgenhörner 7 und das Felgenbett 6 spannen einen Felgenbettraum 6d auf. Die radial äußere Grenze des Raumes 6d wird in Fig. 7 durch die die beiden Felgenhörner 7 verbindende gestrichelte Linie begrenzt. Dieser umlaufende und (etwa) hohlzylindrisch ausgebildete Raum 6d nimmt in allen Ausgestaltungen vorzugsweise die Magneteinrichtung vollständig auf. Insbesondere bei aerodynamischen und hoch bauenden Felgenkörpern, bei denen die Hohlkammer radial deutlich höher ist wie der Bereich der Felgenhörner (vgl. z. B. Fig. 5), wird dadurch ein kurzer Abstand von Magneteinrichtung 40 zu einem z.B. im Mittelmotor integrierten Sensor 32 erreicht.

Radial außen auf dem Felgenbett ist im Ausführungsbeispiel nach der linken Abbildung in Fig. 7 ein Felgenband 13 montiert und hier aufgeklebt, welches die hier nicht sichtbaren Speichenlöcher abdeckt und wenigstens bei "Tubeless-Systemen" auch luftdicht radial nach innen abdichtet. An dem Ventilloch 8 ist auch die Magneteinrichtung 40 auf das Felgenband 13 aufgeklebt. Zur Sicherung wird vorzugsweise ein (doppelseitiges) Klebeband 42f mit einer Klebstoffschicht 10 bzw. mit zwei Klebstoffschichten 10 verwendet. Die wenigstens eine Klebstoffschicht 10 klebt einerseits an dem Boden der Magneteinrichtung 40 und andererseits an dem Felgenband 13 und dichtet somit das Ventilloch 8 an dem Felgenbett 6 ab, sodass dort keine Luft entweichen kann.

Fig. 7 zeigt in der rechten Abbildung eine Variante, bei der kein Felgenband 13 vorgesehen ist und das Gehäuse (42) unmittelbar mit der Klebstoffschicht 10 (vollflächig) auf das Felgenbett 6 geklebt ist. Eine solche Variante ist z.B. bei Tubeless-Systemen möglich.

Insgesamt zeigen die Figuren 1 bis 7 ein Fahrrad 100 und damit ausgerüstete Laufradkomponenten 50. Die Laufradkomponente 50 umfasst eine Felge 1 mit einem daran aufnehmbaren (oder aufgenommenen) Reifen 25 und einer Reifenlauffläche 25a und eine Magneteinrichtung 40 mit einem Gehäuse 42 und einem Magneten 41. Die Felge 1 umfasst einen Felgenkörper 2 mit einem umlaufenden Felgenbett 6 und seitlichen Felgenflanken 3, 4, die am radial äußeren Ende Felgenhörner 7 ausbilden. Zwischen dem Felgenbett und der Reifenlauffläche 25a wird eine Reifenkammer 12 definiert. Das Gehäuse 42 der Magneteinrichtung 40 ist radial außen auf dem Felgenbett des Felgenkörpers 2 und somit innerhalb der Reifenkammer befestigt.

Der Boden des Gehäuses 42 weist hier in Umfangsrichtung einen an den Umfang des Felgenbettes 6 angepassten (Umfangs-) Querschnitt 42e auf. In axialer Richtung weist der Boden des Gehäuses 42 ebenfalls einen an den Querschnitt des Felgenbettes 6 angepassten Querschnitt 42d auf. Das bedeutet, dass der Querschnitt des Bodens 42b des Gehäuses 42 in zwei Richtungen, nämlich in Umfangsrichtung und in axialer Richtung, an den Querschnitt des Felgenkörpers 2 angepasst ist. Dadurch wird ein guter und sicherer Sitz ermöglicht. Weiterhin werden die Montage und der Betrieb geringstmöglich beeinträchtigt.

Im Befestigungsbereich der Magneteinrichtung weist das Gehäuse 42 ein Befestigungsloch 44 auf, an welchem hier das Ventil 27 aufgenommen und durch das Ventilloch 8 in dem Felgenkörper 2 geführt ist. An dem Gehäuse 42 bzw. an dem Befestigungsloch 44 ist ein Dichtsitz 44a ausgebildet, der vorzugsweise an den Querschnitt des Ventils angepasst ist.

In allen Ausgestaltungen und Ausführungsformen ist es bevorzugt, dass die Formen von Sicherungseinrichtung 37 bzw. Ventil 27 und Befestigungsloch 44 so aneinander angepasst sind, dass eine sichere und zuverlässige und einfache Abdichtung auch hoher Betriebsdrücke ermöglicht wird. Zusätzlich ist vorzugsweise eine Dichteinheit als Dichtmittel 28 an dem Ventil 27 und/oder dem Befestigungsloch 44 aufgenommen, um einen luftdichten Sitz auch bei Betriebsdruck zu gewährleisten. Das Dichtmittel kann auch als eine z.B. ringförmige Dichtung wie ein O-Ring oder dergleichen ausgeführt sein. Der O-Ring kann dann an einem Absatz 44b (vgl. Fig. 6a) in dem Befestigungsloch 44 anliegen und die Fläche zwischen Ventil 27 und Absatz 44b in der Magneteinrichtung 40 abdichten.

Das Ventil 27 kann Teil eines Schlauches sein oder als separates "Tubeless-Ventil" ausgebildet sein. Das Ventil 27 wird mit einer Ventilmutter 29 gegen den Felgenboden 5 verschraubt.

Die Magneteinrichtung 40 ist hier radial außen auf dem Felgenbett 6 und zwischen dem Felgenbett und den radial äußeren Endbereichen der Felgenhörner 7 und axial zwischen den Felgenhörnern 7 und beabstandet von den Felgenhörnern 7 aufgenommen. Dabei ist ein axialer Abstand 40a der Magneteinrichtung 40 zu den beiden Wülsten 7a jeweils größer als eine dünnste Wandstärke der Felgenhörner 7 und hier auch größer als eine (größte) axiale Wandstärke 7b der Felgenhörner 7 in dem Bereich der Wülste 7a.

Insbesondere ist der axiale Abstand 40a größer als eine axiale Dicke der Wülste des Reifens. Besonders bevorzugt ist ein radialer Abstand 40b der Magneteinrichtung 40 zu den radial äußeren Endbereichen der Felgenhörner 7 größer als 1 mm oder wenigstens 0,5 mm oder wenigstens 0,25 mm.

**Bezugszeichenliste:**

| | | | |
|---|---|---|---|
| 1 | Felge | 30 | Elektromotor |
| 2 | Felgenkörper | 31 | Mittelmotor |
| 2a | axiale Breite | 32 | Sensor |
| 2b | radiale Höhe | 33 | Motorgehäuse von 30 |
| 3 | Felgenflanke | 37 | Sicherungseinrichtung |
| 4 | Felgenflanke | 40 | Magneteinrichtung |
| 5 | Felgenboden | 40a | axialer Abstand |
| 5a | Felgenbodenfläche | 40b | radialer Abstand |
| 6 | Felgenbett | 41 | Magnet |
| 6a | Felgenbettfläche | 42 | Gehäuse |
| 6b | Felgenbettmulde | 42a | Länge |
| 6d | Felgenbettraum | 42b | Breite |
| 7 | Felgenhorn | 42c | Höhe |
| 7a | Wulst | 42d | Querschnitt |
| 7b | axiale Dicke | 42e | Querschnitt |
| 8 | Ventilloch | 43 | Befestigungsmittel |
| 8a | Ventilloch in 5 | 44 | Durchtrittöffnung, Befestigungsloch |
| 9 | Speichenloch | | |
| 10 | Klebstoffschicht | 44a | Dichtsitz |
| 11 | Hohlkammer | 44b | Absatz |
| 12 | Reifenkammer | 45 | Bodenfläche |
| 13 | Felgenband | 50 | Laufradkomponente |
| 14 | Höhe von 10 | 60 | Laufradkomponente |
| 15 | Höhe 5/40 | 100 | Fahrrad |
| 16 | Höhe 40/25 | 103 | Rahmen |
| 17 | Abstand 32/40 | 104 | Gabel, Federgabel |
| 20 | Laufrad | 105 | Hinterraddämpfer |
| 21 | Vorderrad | 106 | Lenker |
| 22 | Hinterrad | 107 | Sattel |
| 23 | Nabe | 110 | Akku |
| 24 | Speiche | 111 | Ritzeleinrichtung |
| 25 | Reifen | 112 | Pedalantrieb |
| 25a | Reifenwulst | 113 | Steuereinrichtung |
| 26 | Lauffläche | 114 | Anzeige |
| 27 | Ventil | | |
| 28 | Dichtmittel | | |
| 29 | Ventilmutter | | |

## Patentansprüche

1. Laufradkomponente (50) für wenigstens teilweise muskelbetriebene Fahrzeuge und insbesondere Fahrräder (100), umfassend eine Felge (1) zur Aufnahme eines mit einer Reifenlauffläche (25a) ausgerüsteten Reifens (25),
und umfassend eine Magneteinrichtung (40) mit einem Gehäuse (42) und einem Magneten (41),
wobei die Felge (1) einen Felgenkörper (2) mit einem umlaufenden Felgenbett (6) und seitlichen Felgenflanken (3, 4) umfasst, die am radial äußeren Ende Felgenhörner (7) ausbilden,
wobei der Felgenkörper (2) ein Ventilloch (8) an einer radial äußeren Felgenbettfläche (6a) aufweist,
und wobei zwischen dem Felgenbett und einer Reifenlauffläche (25a) eines auf dem Felgenkörper aufnehmbaren Reifens (25) eine Reifenkammer (12) definiert wird,
**dadurch gekennzeichnet,**
**dass** das Gehäuse (42) der Magneteinrichtung (40) durch eine Klebstoffschicht (10) zwischen dem Felgenbett (6) und dem Gehäuse (42) der Magneteinrichtung (40) mit dem Felgenkörper (2) verliersicher verbunden ist,
und **dass** das Gehäuse (42) der Magneteinrichtung (40) in dem Bereich des Ventillochs (8) eine Durchtrittöffnung (44) für das Ventil (27) aufweist, durch welche das Ventil (27) ragt und die Magneteinrichtung (40) radial von außen auf dem Felgenbett (6) des Felgenkörpers (2) und somit innerhalb der Reifenkammer befestigt.

2. Laufradkomponente (50) nach Anspruch 1, wobei das Gehäuse (42) der Magneteinrichtung (40) durch eine Klebstoffschicht (10) zwischen dem Felgenbett (6) und dem Gehäuse (42) der Magneteinrichtung (40) verliersicher an dem Felgenkörper (2) gehalten wird.

3. Laufradkomponente (50) nach dem vorhergehenden Anspruch, wobei die Klebstoffschicht (10) unmittelbar zwischen dem Gehäuse (42) der Magneteinrichtung (40) und dem Felgenbett (6) angeordnet ist.

4. Laufradkomponente (50) nach dem Anspruch 2, wobei zwischen dem Gehäuse (42) der Magneteinrichtung (40) und dem Felgenbett (6) ein umlaufendes Felgenband (13) angeordnet (und insbesondere aufgeklebt) ist und wobei die Klebstoffschicht (10) unmittelbar zwischen dem Gehäuse (42) der Magneteinrichtung (40) und dem Felgenband angeordnet ist.

5. Laufradkomponente (50) nach einem der vorhergehenden Ansprüche, wobei in dem Felgenkörper (2) eine Hohlkammer (11) ausgebildet ist, wobei die Hohlkammer (11) radial nach innen durch einen Felgenboden (5) und radial nach außen durch das Felgenbett (6) begrenzt wird.

6. Laufradkomponente (50) nach einem der vorhergehenden Ansprüche, wobei eine Bodenfläche (45) des Gehäuses (42) der Magneteinrichtung (40) in Umfangsrichtung der Felge (1) gekrümmt ausgebildet ist,
und wobei eine Bodenfläche (45) des Gehäuses (42) der Magneteinrichtung (40) an ein Querschnittsprofil der Felgenbettfläche (6a) angepasst ist,
und wobei an dem Felgenbett (6) eine umlaufende Felgenbettmulde (6b) ausgebildet ist, in welcher die Magneteinrichtung (40) aufgenommen ist.

7. Laufradkomponente (50) nach einem der vorhergehenden Ansprüche, wobei an der Bodenfläche (45) des Gehäuses ein Klebeband (42f) befestigt ist, mit dem die Magneteinrichtung mit dem Felgenkörper verbunden wird, wobei das Klebeband (42f) auf ein Felgenband (13) oder auf den Felgenkörper geklebt wird.

8. Laufradkomponente (50) einem der vorhergehenden Ansprüche, wobei radial äußere Endbereiche der Felgenhörner (7) axial nach innen überstehende umlaufende Wülste (7a) bilden, und wobei an den Felgenhörnern (7) ein Reifen (25) aufgenommen ist, und wobei an den axial nach innen überstehenden umlaufenden Wülsten (7a) der Felgenhörner (7) axial innen Reifenwülste (25a) des Reifens (25) anliegen, und wobei die Magneteinrichtung (40) axial zwischen den umlaufenden Wülsten (7a) und/oder den Reifenwülsten (25a) aufgenommen ist.

9. Laufradkomponente (50) nach einem der vier vorhergehenden Ansprüche, wobei ein radialer Abstand (40b) der Magneteinrichtung (40) zu den radial äußeren Endbereichen der Felgenhörner (7) größer ist als 0,25 mm.

10. Laufradkomponente (50) nach einem der vorhergehenden Ansprüche, wobei der Felgenkörper (2) eine geringere axiale Breite (2a) als eine radiale Höhe (2b) des Felgenkörpers (2) aufweist.

11. Laufradkomponente (50) nach einem der vorhergehenden Ansprüche, wobei die Magneteinrichtung (40) einen Dichtsitz (44a) zur Abdichtung des Ventils (27) an dem Befestigungsloch (44) umfasst und wobei an dem Dichtsitz (44a) ein Dichtmittel (28) aufgenommen ist.

12. Fahrrad (100) umfassend wenigstens zwei Laufräder (20) und einen wenigstens teilweise muskelbetriebenen Pedalantrieb (112), wobei wenigstens eines der Laufräder eine Laufradkomponente (50) nach einem der vorhergehenden Ansprüche umfasst,
wobei wenigstens eines der Laufräder als Vorderrad (21) und wenigstens eines der Laufräder als Hinterrad (22) ausgebildet ist, und jeweils eine Nabe (23) und eine mit der Nabe (23) verbundene Felge (1) mit einem Felgenkörper (2) mit seitlichen Felgenflanken umfasst, die am radial äußeren Ende Felgenhörner (7) ausbilden, wobei der Felgenkörper (2) zwischen den Felgenhörnern (7) ein Felgenbett () mit einer radial äußeren Felgenbettfläche (6a) mit einem daran ausgebildeten Ventilloch (8) aufweist und einen auf dem Felgenkörper (2) montierten Reifen (25) mit einer Reifenlauffläche (25a) umfasst, wobei die Reifenlauffläche (25a) und das Felgenbett (6) eine Reifenkammer (12) definieren,
wobei an wenigstens einem Laufrad (20) eine Magneteinrichtung (40) auf dem Felgenbett (6) innerhalb der Reifenkammer (12) aufgenommen ist, um bei der Drehung des Laufrades (20) Impulse an einem Sensor (32) zu erzeugen.

13. Fahrrad (100) nach dem vorhergehenden Anspruch, wobei wenigstens ein Sensor (32) zur Ermittlung wenigstens eines Fahrparameters umfasst ist, welcher magnetische Impulse bei der Drehbewegung des Laufrades (20) erfasst.

14. Fahrrad (100) nach dem vorhergehenden Anspruch, wobei wenigstens ein Sensor (32) am Rahmen und insbesondere in dem Bereich des Tretlagers oder an dem Sitzrohr angeordnet ist.

15. Fahrrad (100) nach einem der drei vorhergehenden Ansprüche, wobei ein Elektromotor (30) zur Unterstützung des Pedalantriebs (112) umfasst ist, wobei der Elektromotor (30) als Mittelmotor (31) ausgebildet ist und in Längsrichtung zwischen dem Vorderrad (21) und dem Hinterrad (22) aufgenommen ist und wobei in dem Gehäuse des Elektromotors (30) ein Sensor (32) zur Ermittlung wenigstens eines Fahrparameters aufgenommen ist.
